**Europäisches Patentamt**

(19) **European Patent Office**

**Office européen des brevets**

(11) Numéro de publication: **0 132 633
B1**

(12) **FASCICULE DE BREVET EUROPEEN**

(51) Int. Cl.⁴: **G 04 C 13/11, H 02 K 37/00**

(45) Date de publication du fascicule du brevet:
**24.06.87**

(21) Numéro de dépôt: **84107699.5**

(22) Date de dépôt: **03.07.84**

(54) **Moteur électromagnétique pas à pas.**

(30) Priorité: **06.07.83 CH 3699/83**

(43) Date de publication de la demande:
**13.02.85 Bulletin 85/7**

(45) Mention de la délivrance du brevet:
**24.06.87 Bulletin 87/26**

(84) Etats contractants désignés:
**DE FR GB**

(56) Documents cités:
**DE - A - 2 644 231
FR - A - 2 464 516
GB - A - 2 054 978**

**10E CONGRES INTERNATIONAL DE CHRONOMETRIE,
11-14 septembre 1979, vol. 4, pages 55-57, Büren, CH; L.
KIKUYAMA et al.: "Moteur a double stator"
THE BKSTS JOURNAL, vol. 62, no. 7, juillet 1980, pages
316-318, Londres, GB; P. HAYWOOD: "Stepper motor
drives"**

(73) Titulaire: **Omega SA, Rue Stämpfli 96, CH-2500 Bienne
(CH)**

(72) Inventeur: **Mai, Tu Xuan, Rue Blancherie 34,
CH-1022 Chavannes (CH)**

(74) Mandataire: **de Raemy, Jacques et al, ICB Ingénieurs
Conseils en Brevets SA Faubourg du Lac 6,
CH-2501 Bienne (CH)**

## Description

L'invention est relative à un moteur électromagnétique pas à pas pour entraîner notamment un mouvement d'horlogerie et comprenant un stator et un rotor aimanté, le circuit magnétique dudit stator portant un enroulement d'un premier type et au moins un enroulement d'un second type.

Un moteur répondant à cette définition générique est connu de plusieurs documents, par exemple de la demande de brevet FR 2 461 392 et du certificat d'addition FR 2 471 694 où se trouve décrit un moteur électromagnétique à deux sens de rotation et qui comprend un circuit magnétique à deux enroulements alimentés simultanément. Cette disposition propose essentiellement un stator présentant trois épanouissements polaires entourant le rotor dont l'un est commun aux deux enroulements et dont les deux autres sont respectivement dépendants de chacun desdits enroulements. Par le fait du principe de conservation du flux, on s'aperçoit qu'un tel arrangement exerce sur le rotor une force d'attraction vers l'épanouissement polaire commun qui est deux fois plus élevé que la force qui s'exerce vers les deux autres épanouissements polaires. On peut dès lors penser raisonnablement que cette attraction magnétique unilatérale, par le déséquilibre mécanique qu'elle entraîne, va créer des contraintes sur les paliers dans lesquels tourne l'axe du rotor et provoquer une usure qui va raccourcir la durée de vie du moteur.

Cet inconvénient est éliminé si l'on met en œuvre les moyens qui apparaissent dans les revendications.

L'invention sera expliquée maintenant au moyen de la description qui suit illustrée à titre d'exemple par les dessins dans lesquels:

La figure 1a est une représentation schématique d'une première forme d'exécution du moteur selon l'invention où le stator porte un premier enroulement et deux seconds enroulements en version biphasée.

La figure 1b est une version monophasée du moteur présenté en figure 1a.

La figure 2 montre comment sont connectés les enroulements du moteur de la figure 1a pour une marche biphasée.

La figure 3 représente la valeur des couples en fonction de l'angle de rotation du rotor en marche biphasée.

Les figures 4a et 4b sont un exemple des implusions envoyées aux enroulements en marche biphasée start-stop pour la marche avant et la marche arrière respectivement.

Les figures 4c et 4d sont un exemple des impulsions envoyées aux enroulements en marche biphasée et vitesse accélérée pour la marche avant et 1a marche arrière respectivement.

La figure 5 montre comment sont connectés les enroulements du moteur de la figure 1a pour une marche monophasée.

La figure 6 représente la valeur des couples en fonction de l'angle de rotation du rotor en marche monophasée.

La figure 7 est un exemple des impulsions envoyées aux enroulements en marche monophasée start-stop pour la marche avant.

La figure 8 montre en variante comment peuvent être connectés les enroulements du moteur de la figure 1a pour une marche monophasée.

La figure 9 représente la valeur des couples d'un moteur réalisé selon une seconde forme d'exécution où le stator dudit moteur ne porte qu'un second enroulement.

Les figures 10a et 10b sont un exemple des impulsions envoyées au moteur selon la seconde forme d'exécution dans le cas de la marche avant avec asservissement (monophasée) et de la marche arrière (biphasée) respectivement pour un fonctionnement start-stop.

La figure 11 est un exemple des impulsions envoyées aus moteur selon la seconde forme d'exécution dans le cas d'une marche à grande vitesse avec asservissement.

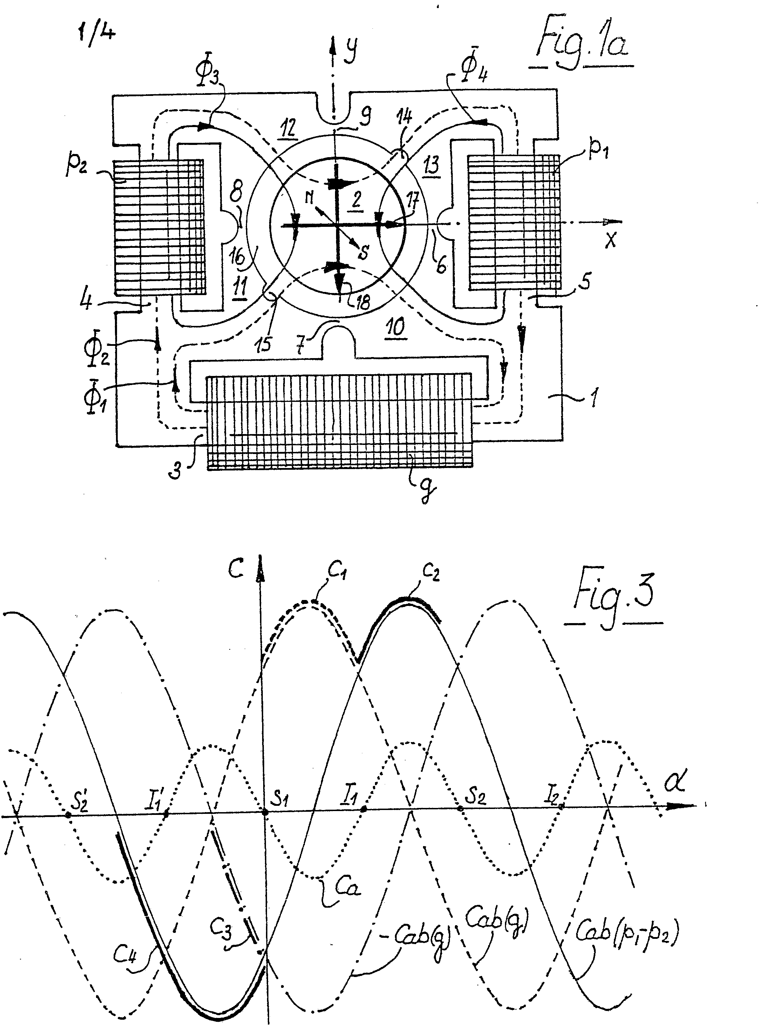

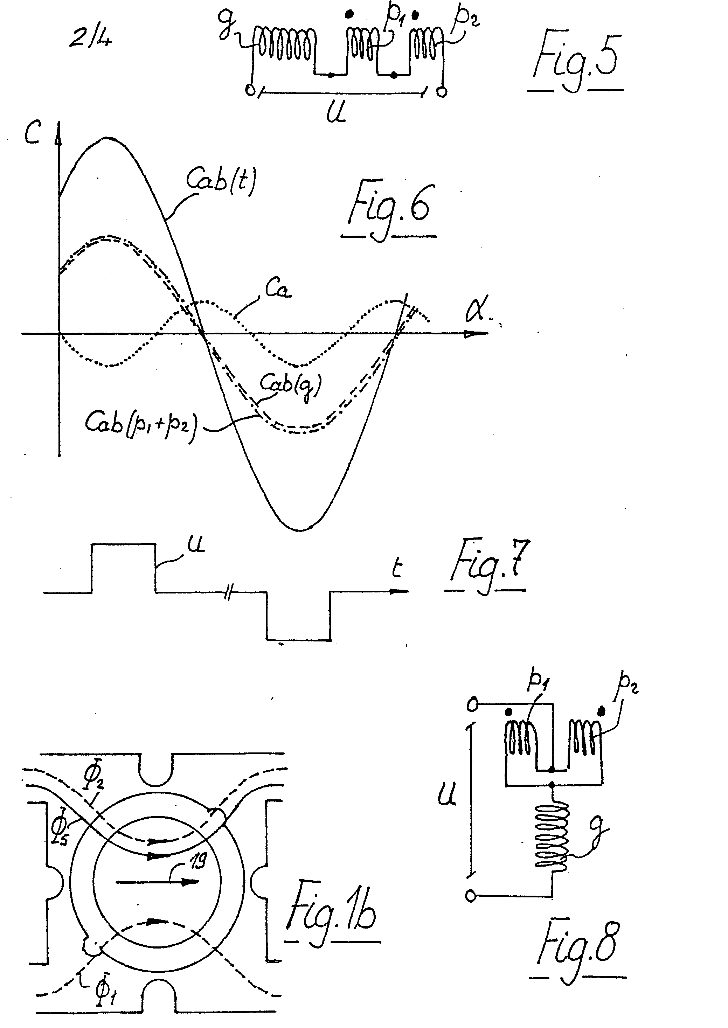

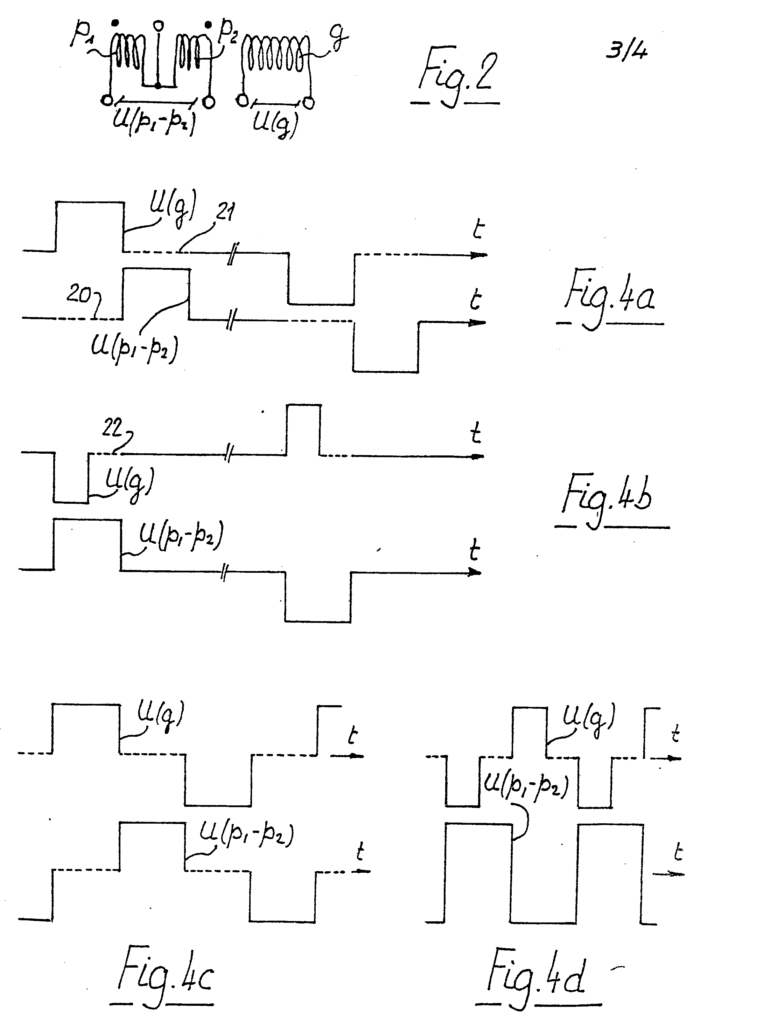

La figure 1a est une représentation schématique du moteur selon l'invention et selon une première variante d'exécution. Il est composé essentiellement d'un stator 1 et d'un rotor 2. Le stator porte un enroulement du premier type dit premier enroulement g et deux enroulements du seconds type dits seconds enroulement $p_1$ et $p_2$. Dans une version préférée de l'invention, l'enroulement g possède un nombre de tours deux fois plus grand que le nombre de tours de chacun des enroulements $p_1$ et $p_2$. L'enroulement g est bobiné sur le noyau 3 et les enroulements $p_1$ et $p_2$ sont bobinés sur les noyaux 5 et 4 respectivement. Les noyaux 3, 4, et 5 offrent une solution de continuité avec le stator proprement dit 1 et en font partie intégrante. La partie centrale du stator 1 est évidée et, dans cet évidement, est disposé le rotor 2. Evidement et rotor sont séparés par l'entrefer 16. On pratique encore dans la partie centrale du stator quatre découpures en forme de demi-lune pour former des isthmes saturables 6, 7, 8 et 9. Il est bien entendu que l'on pourrait remplacer ces isthmes par des fentes ou entrefers. Il ressort de cette disposition que le stator comporte quatre épanouissements polaires référencés 10, 11, 12 et 13. Enfin, deux autres découpures 14 et 15 formées dans la paroi interne de l'évidement du stator définissent un angle de positionnement pour le rotor quand les bobines ne sont pas alimentées. Le rotor quant à lui comprend un aimant permanent dont le sens d'aimantation est orienté diamétralement. Au repos, sa position est celle indiquée sur la figure selon la double flèche N – S.

Dans l'arrangement représenté à la figure 1a, on s'aperçoit que l'alimentation de l'enroulement g donne naissance à un flux qui se divise en deux parties sensiblement égales pour soumettre le rotor au champ magnétique issu dudit enroulement: il s'agit du flux $\Phi_1$ qui atteint directement l'entrefer et du flux $\Phi_2$ qui, pour atteindre ledit entrefer, doit passer par les noyaux 4 et 5 des enroulements $p_1$ et $p_2$. Ainsi dans cette disposition, les champs magnétiques correspondant aux flux $\Phi_1$ et $\Phi_2$ qui agissent sur le rotor sont sensiblement symétriques par rapport aux deux axes x et y perpendiculaires entre eux, comme cela apparaît sur la figure 1a. De ce fait, on comprendra que l'axe résultant de ces champs est parallèle à l'axe x et dirigé dans le sens de la flèche 17. On trouve le sens opposé à la flèche 17 quand on alimente l'enroulement g par une impulsion de sens opposé.

Deux cas peuvent maintenant se présenter selon que les enroulements $p_1$ et $p_2$ sont alimentés en phase ou en opposition de phase.

On considère d'abord le cas où les enroulements $p_1$ et $p_2$ sont alimentés en opposition de phase. La figure 2 montre comment sont connectés ces enroulements, les points symbolisant le sens de bobinage. La figure 2 montre aussi, en regard des enroulements $p_1$ et $p_2$, l'enroulement g qui est indépendant. A ce moment, les flux $\Phi_3$ et $\Phi_4$ issus chacun des enroulements $p_1$ et $p_2$ respectivement se présentent comme illustrés sur la figure 1a. L'axe du champ résultant correspondant à $\Phi_3$ et $\Phi_4$ est dirigé dans le sens de la flèche 18. On voit immédiatement que l'axe du champ 17 issu de l'enroulement g et l'axe du champ 18 issu des enroulements $p_1$ et $p_2$ connectés en opposition de phase sont perpendiculaires entre eux.

Dans ces conditions, on se reportera au diagramm de la figure 3 qui représente la valeur des couples C qui agissent sur le rotor en fonction de son angle de rotation $\alpha$. La marche avant est celle des valeurs positives de $\alpha$ et la marche arrière, celle des valeurs négatives de $\alpha$. On rappellera ici que le rotor d'un moteur électromagnétique pas à pas est soumis à au moins deux sortes de couples: un couple statique de maintien Ca dû à l'aimant seul et un couple dynamique moteur ou couple mutuel Cab dû à l'interaction du flux de l'aimant avec le flux de la bobine lorsque celle-ci est alimentée. Les points $S'_2$, $S_1$ et $S_2$ sont des points d'équilibre stable en l'absence de courant et correspondent à la position du rotor indiquée N – S sur la figure 1a, alors que les points $I'_1$ $I_1$ et $I_2$ sont des points d'équilibre instable et correspondent à une position du rotor où l'axe N – S se trouve pointé vers les découpures 14 et 15 indiquées sur la figure 1a.

Sur la figure 3, on a reporté le couple mutuel de l'enroulement g, Cab(g) et le couple mutuel des deux enroulements $p_1$ et $p_2$ alimentés en opposition de phase, Cab($p_1$–$p_2$). Ces deux couples sont décalés de 90° suivant les explication qui ont été données plus haut. La courbe Cab(g) résulte d'une alimentation de l'enroulement g en courant constant et la courbe – Cab(g), d'une alimentation en courant constant de signe opposé. La courbe Cab($p_1$–$p_2$) résulte d'une alimentation en courant constant des enroulements $p_1$ et $p_2$ disposés comme indiqué sur la figure 2. Pour ne pas alourdir le dessin, la courbe – Cab($p_1$–$p_2$) n'a pas été représentée.

Sie l'on avait affaire à un moteur ne possédant que le seul enroulement g, on serait en présence d'un moteur monophasé classique. Dans ce cas, le rotor est amené du point de repos $S_1$ au point $S_2$ par le couple mutuel Cab(g) suffisant à lui faire dépasser une position angulaire $\alpha$ située quelque peu après la position $I_1$, le reste du parcours se faisant grâce aux énergies cinétique et potentielle emmagasinées pendant l'alimentation. Dans ce cas cependant, on sait qu'il n'est pas possible d'entraîner le moteur en marche arrière car l'énergie utile – Cab(g) que l'on peut fournir au moteur est plus petite que l'énergie de maintien.

Le moteur selon l'invention, de par son enroulement g et ses deux enroulements $p_1$ et $p_2$ connectés en opposition de phase, se comporte comme un moteur biphasé à champs perpendiculaires comme illustré en figure 1a. Il est donc capable de tourner dans un sens ou dans l'autre, suivant les impulsions que l'on enverra à ses enroulements. Selon le moteur choisi et les couples mécanique à vaincre, on choisira la configuration d'impulsions la mieux adaptée. On donnera ici à titre d'exemple deux alimentations possibles l'une pour la marche avant et l'autre pour la marche arrière.

La figure 4a présente, à la ligne supérieure, la tension d'alimentation U(g) dans l'enroulement g et, à la ligne inférieure, la tension d'alimentation U($p_1$–$p_2$) dans les enroulements $p_1$ et $p_2$ dans le but de faire tourner le rotor en marche avant. Si l'on se réfère à la figure 3, la tension U(g) est maintenue sur g pendant le temps nécessaire qu'il faut pour que le rotor développe le couple $C_1$ et tourne de la position $S_1$ à la position $I_1$, puis ce sont les enroulements $p_1$ et $p_2$ qui prennent le relais si on les alimente au moyen de la tension U($p_1$–$p_2$) maintenue également pendant un temps suffisant pour qu'on soit assuré que le rotor développe un couple $C_2$ nécessaire à lui faire parcourir 180°. Il se fixe alors au point $S_2$. Après un laps de temps, on inverse les alimentations pour effectuer le prochain pas. La figure 4a montre aussi que lorsque g est alimenté, les enroulements $p_1$ et $p_2$ sont mis en circuit ouvert (pointillé 20) puis, lorsque ce sont les enroulements $p_1$ et $p_2$ qui sont alimentés, c'est l'enroulement g qui es disposé en cuircuit ouvert (pointillé 21). Cette disposition est nécessaire car, sans cela, une force contre-électromotirice prendrait naissance dans l'enroulement non alimenté qui freinerait l'avance du rotor.

La figure 4b présente, à la ligne supérieure, la tension d'alimentation U(g) dans l'enroulement g et, à la ligne inférieure, la tension U($p_1$–$p_2$) dans le but de faire tourner le moteur en marche arrière. Il s'agit donc de faire parvenir le rotor de la position $S_1$ à la position $S'_2$. Pour cela et en se référant en même temps à la figure 3, on alimente l'enroulement g par une tension – U(g) apte à développer le couple $C_3$ qu'on interrompt avant que le rotor ait tourné de 45°. On alimente aussi les enroulements $p_1$ et $p_2$ au moyen de la tension U($p_1$–$p_2$) apte à développer le couple $C_4$. Le couple $C_4$ est maintenu pendant un temps suffisamment long pour que le rotor parvienne au nouveau point $S'_2$. Ainsi, on s'aperçoit que pour la marche arrière il sera nécessaire (pour le moteur et les contraintes choisis, on le rappelle) d'envisager d'abord simultanément deux impulsions de polarité inverse alimentant chacune les deux sortes de bobines en présence, puis une seule impulsion n'alimentant plus que les enroulements $p_1$ et $p_2$. Après un laps de temps, on inverse les alimentation pour parcourir le prochain pas. Des mêmes dispositions que celles discutées à propos de la figure 4a seront prises ici pour éviter de court-circuiter l'enroulement g pendant que les enroulements $p_1$ et $p_2$ sont encore alimentés (pointillé 22).

Les explications qui viennent d'être données concernent un moteur à marche start-stop où le rotor fait un pas par seconde pour amener par exemple l'aiguille trotteuse d'une montre à battre la seconde. Dans certains cas, il peut être avantageux de faire avancer ou reculer cette aiguille à grande vitesse, par exemple pour l'affichage d'une heure de réveil ou le changement de fuseau horaire. Le moteur selon l'invention convient également très bien à ce genre de fonction car il suffit pour cela de supprimer les périodes de repos qui séparent les groupes d'impulsions alternées, ce qui amène aux diagrammes des figure 4c pour la marche avant rapide et figure 4d pour la marche arrière rapide.

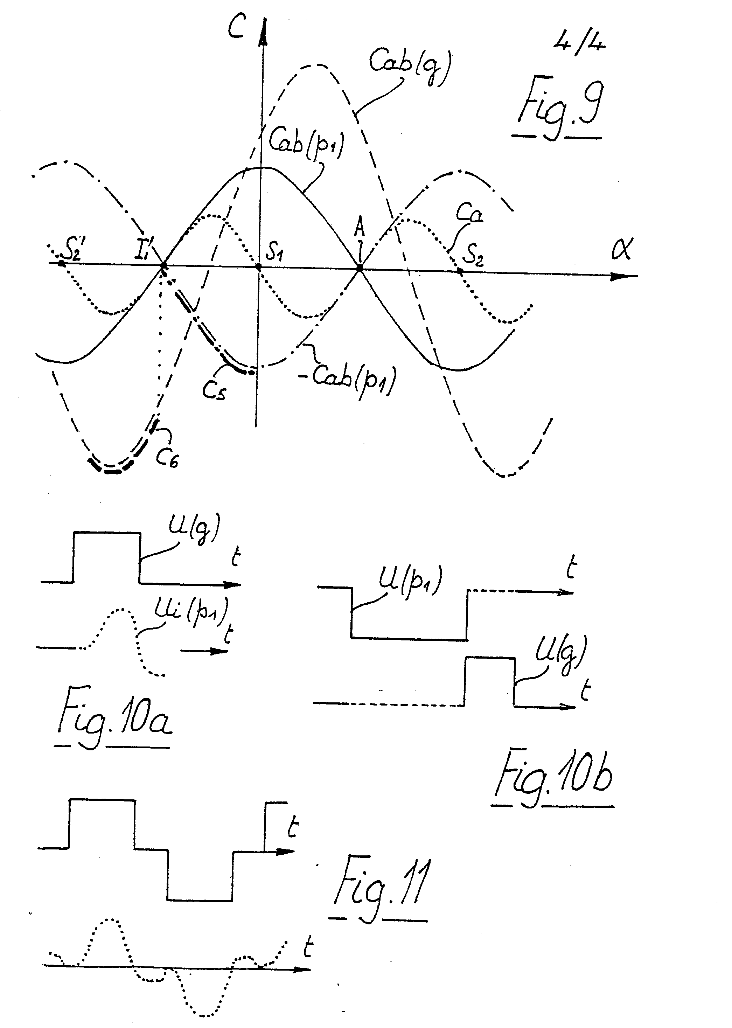

On va considérer maintenant le cas où les enroulements $p_1$ et $p_2$ du moteur sont alimentés en phase. Dans ce cas, comme on peut le voir en figure 5, l'enroulement g et les deux enroulements $p_1$ et $p_2$ (dont on observera les points symbolisant le sens de bobinage) sont tous alimentés en série au moyen d'impulsions d'amplitude U. La configuration des flux dans la région du rotor est alors modifiée et se présente schématiquement comme illustré en figure 1b, figure dans laquelle la répartition des enroulements (non représentés) est identique à celle du moteur présenté en figure 1a.

Comme on l'a déjà expliqué, l'alimentation de l'enroulement g donne naissance à un flux qui se divise en deux parties: $\Phi_1$ et $\Phi_2$. Comme les enroulements $p_1$ et $p_2$ sont alimentés en phase, la combinaison de leurs flux donnera naissance au flux $\Phi_5$ qui apparaît sur la figure 1b. Le flux $\Phi_5$ a les mêmes direction et même sens que les flux $\Phi_1$ et $\Phi_2$ et on peut montrer que son amplitude est sensiblement égale à l'amplitude des flux $\Phi_1$ et $\Phi_2$ réunis. L'axe résultant du flux $\Phi_5$ et des flux $\Phi_1$ et $\Phi_2$ réunis soumet alors le rotor à un champ dont la résultante est dirigée dans le sens de la flèche 19. Ainsi, en d'autres termes, l'axe des deux champs magnétiques engendrés par l'enroulement g et celui engendré par les enroulements $p_1$ et $p_2$ alimentés en phase ont même sens et même direction.

Sur la figur 6, on a reporté le couple de maintien Ca, le couple mutuel dû à l'enroulement g, Cab(g) et le couple mutuel dû aux deux enroulements $p_1$ et $p_2$ alimentés en phase, $Cab(p_1+p_2)$. Les couples mutuels sont en phase et on mêmes amplitudes. Il résulte de cela un couple Cab(t) deux fois plus important qui peut être utilisé chaque fois que le moteur doit vaincre une charge sortant de l'ordinaire.

Le moteur se comporte ici comme un moteur monophasé à un seul sens préférentiel de marche. On l'alimentera au moyen d'impulsions bipolaires classiques comme représenté en figure 7.

On peut désirer utiliser le moteur pour un produit déterminé selon l'un ou l'autre des branchements qui viennent d'être décrits. On doit remarquer cependant que le passage du branchement montré à la figure 2 (biphasé) au branchement montré à la figure 5 (monophasé) oblige de croiser les enroulements $p_1$ et $p_2$, ce qui conduit à rendre accessibles les quatre fils desdits enroulements. Pour simplifier la commutation, on peut utiliser le schéma de connexion illustré en figure 8. Ce schéma est équivalent à celui montré en figure 5 et a l'avantage de présenter, pour les enroulements $p_1$ et $p_2$, le même schéma de connexion que celui montré en figure 2. Trois sorties seulement sont nécessaires au groupe des enroulements $p_1$ et $p_2$ quand on veut passer d'un schéma à l'autre.

La seconde variante de moteur selon l'invention telle qu'elle va être exposée ci-après comprend également un rotor aimanté diamétralement, un stator comprenant quatre épanouissements polaires et un premier enroulement g. A la différence du moteur représenté à la figure 1a, le moteur selon cette variante ne comprend qu'un second enroulement $p_1$. Dans ces conditions, et sans qu'il soit nécessaire de tracer le chemin des flux, on comprendra que le diagramme de la figure 9 présente un couple mutuel dû à l'enroulement g, Cab(g) comme déjà exposé et un couple mutuel dû à l'enroulement $p_1$, $Cab(p_1)$, déphasé de 45° par rapport au couple Cab(g) et d'amplitude deux fois plus faible que l'amplitude du couple Cab(g) puisqu'on a admis que l'enroulement $p_1$ possède deux fois moins de nombre de tours que l'enroulement g. En effet, dans cette variante, l'axe résultant des deux champs magnétiques engendrés par le premier enroulement g et celui engendré par le second enroulement $p_1$ font sensiblement entre eux un angle de 45°.

Ce moteur est également susceptible de tourner dans les deux sens de rotation et l'on donnera ci-dessous deux exemples possibles d'alimentation pour chacun de ces sens.

En marche avant, on alimentera le seul enroulement g et l'impulsion illustrée en figure 10a sera choisie de longueur convenable pour faire tourner le rotor de la position $S_1$ à la position $S_2$. On a affaire à un simple moteur monophasé. Comme on dispose de l'enroulement $p_1$, non utilisé pour l'entraînement du rotor, on peut s'en servir comme bobine captrice qui va délivrer, lorsque le rotor tourne, une tension induite $Ui(p_1)$ à ses bornes. Quand le couple Ca passe par zéro, au point A, on est assuré que le rotor pourra terminer son pas angulaire par ses propres moyens (énergies cinétique et potentielle) et c'est à ce moment qu'on interrompra l'impulsion U(g). Le passage au point A est détecté par l'enroulement $p_1$ qui présente à cet instant une inversion de signe de la tension $Ui(p_1)$. Cette inversion de signe sert alors de signal pour couper l'impulsion de commande U(g).

La figure 11 fait comprendre comment il est possible d'entraîner le rotor en marche avant et à grande vitesse. On rapproche les impulsions alternées U(g) sans cependant les faire se rejoindre tout à fait pour laisser au rotor le temps d'atteindre le point $S_2$. Comme pour le cas précédent, on se sert de l'enroulement $p_1$ pour asservir la marche du moteur.

En marche arrière, le graphique de la figure 9 et les impulsions présentées en figure 10b montrent qu'on alimente d'abord l'enroulement $p_1$ par la tension $U(p_1)$ apte à développer le couple $C_5$ (identique au tracé du couple $- Cab(p_1)$ pour amener le rotor à tourner en arrière d'environ 90° (point $I'_1$). Ensuite c'est l'enroulement g qu'on alimente par la tension $U(g)$, ce qui développe le couple $C_6$ (identique au tracé du couple $Cab(g)$) suffisant à conduire le rotor à sa nouvelle position $S'_2$.

Le moteur qui vient d'être décrit par ses deux variantes principales permet d'envisager une foule de possibilités de marches dont quelques-unes ont été décrites ici en détail. On retiendra surtout que grâce à ses quatre épanouissements polaires les forces exercées sur le rotor sont toujours équilibrées, ce qui a pour résultat d'épargner considérablement l'axe et les paliers.

## Revendications

1. Moteur électromagnétique pas à pas pour entraîner notamment un mouvement d'horlogerie et comprenant un stator (1) et un rotor aimanté (2), le circuit magnétique dudit stator portant un enroulement (g) d'un premier type et au moins un enroulement ($p_1$) d'un second type bobinés chacun autour d'un noyau correspondant (3, 5), caractérisé par le fiat que le stator comporte quatre épanouissements polaires (10, 11, 12, 13) séparés par des isthmes saturables (6, 7, 8, 9) ou des fentes et que le circuit magnétique dudit stator est arrangé de telle façon que le flux ($\Phi_1$, $\Phi_2$) engendré par l'alimentation de l'enroulement (g) du premier type via son noyau (3) est partagé en deux parties sensiblement égales dont l'une des deux ($\Phi_2$) passe par le noyau (5) de l'enroulement ($p_1$) du second type, cas échéant par les noyaux (4, 5) de chacun des enroulements ($p_1$, $p_2$) du second type, pour soumettre le rotor à deux champs magnétiques sensiblement symétiques par rapport à deux axes (x, y) perpendiculaires entre eux.

2. Moteur selon la revendication 1, caractérisé par le fait que le circuit magnétique du stator est arrangé pour porter deux enroulements ($p_1$, $p_2$) du second type de façon telle que l'axe (17) résultant du champ magnétique engendré par l'enroulement (g) du premier type et celui (18) engendré par lesdits enroulements ($p_1$, $p_2$) du second type alimentés en opposition de phase sont sensiblement perpendiculaires entre eux.

3. Moteur selon la revendication 1, caractérisé par le fait que le circuit magnétique du stator est arrangé pour porter deux enroulements ($p_1$, $p_2$) du second type de façon telle que l'axe résultant du champ magnétique engendré par l'enroulement (g) du premier type et celui engendré par lesdits enroulement du second type alimentés en phase ont même sens et même direction (19).

4. Moteur selon la revendication 1, caractérisé par le fait que le circuit magnétique du stator est arrangé pour porter un enroulement ($p_1$) du second type de façon telle que l'axe résultant du champ magnétique engendré par l'enroulement (g) du premier type et celui engendré par ledit enroulement ($p_1$) du second type font sensiblement entre eux un angle de 45°.

## Patentansprüche

1. Elektromagnetischer Schrittmotor, insbesondere zum Antrieb eines Uhrwerks, mit einem Stator (1) und einem magnetisierten Rotor (2), wobei der Magnetkreis des Stators eine Wicklung (g) eines ersten Typs und wenigstens eine Wicklung ($p_1$) eines zweiten Typs aufweist, die jeweils um einen zugehörigen Kern (3, 5) gewickelt sind, dadurch gekennzeichnet, dass der Stator vier Polschuhe (10, 11, 12, 13) aufweist, die durch sättigbare Engstellen (6, 7, 8, 9) oder Ausschnitte getrennt sind und dass der Magnetkreis des Stators derart ausgestaltet ist, dass der bei Speisung der Wicklung (g) des ersten Typs erzeugte Fluss ($\Phi_1$, $\Phi_2$) über deren Kern (3) in zwei im wesentlichen gleiche Teile aufgeteilt wird, von denen einer ($\Phi_2$) den Kern (5) der Wicklung ($p_1$) des zweiten Typs bzw. die Kerne (4, 5) jeder Wicklung ($p_1$, $p_2$) des zweiten Typs durchsetzt, um den Rotor mit zwei Magnetfeldern zu beaufschlagen, die im wesentlichen symmetrisch bezüglich zweier aufeinander senkrecht stehender Achsen (x, y) sind.

2. Motor nach Anspruch 1, dadurch gekennzeichnet, dass der Magnetkreis des Stators so ausgestaltet ist, dass er zwei Wicklungen ($p_1$, $p_2$) des zweiten Typs derart aufweist, dass die Achse (17), die aus dem von der Wicklung (g) des ersten Typs erzeugten Magnetfeldes resultiert und diejenige (18), die von den gegenphasig gespeisten Wicklungen ($p_1$, $p_2$) des zweiten Typs erzeugt wird, im wesentlichen senkrecht zueinander sind.

3. Motor nach Anspruch 1, dadurch gekennzeichnet, dass der Magnetkreis des Stators so ausgestaltet ist, dass er zwei Wicklungen ($p_1$, $p_2$) des zweiten Typs derart aufweist, dass die Achse die aus dem von der Wicklung (g) des ersten Typs erzeugten Magnetfeldes resultiert und diejenige, die von den gleichphasig gespeisten Wicklungen des zweiten Typs erzeugt wird, im wesentlichen das gleiche Vorzeichen und die gleiche Richtung (19) aufweisen.

4. Motor nach Anspruch 1, dadurch gekennzeichnet, dass der Magnetkreis des Stators so ausgestaltet ist, dass er eine Wicklung ($p_1$) des zweiten Typs derart aufweist, dass die Achse, die aus den von der Wicklung (g) des ersten Typs erzeugten Magnetfeldes resultiert und diejenige, die von der Wicklung ($p_1$) des zweiten Typs erzeugt wird, zwischen sich einen Winkel von im wesentlichen 45° einschliessen.

## Claims

1. Electromagnetic stepping motor adapted in particular to drive a timepiece movement and comprising a stator (1) and a magnetized rotor (2) the magnetic circuit of said stator including one winding (g) of a first type and at least one winding ($p_1$) of a second type, each wound around a corresponding core (3, 5) characterized by the fact that said stator comprises four polar expansions (10, 11, 12, 13) separated by saturable isthmuses (6, 7, 8, 9) or slots, and that the magnetic circuit of said stator is arranged in a manner such that the flux ($\Phi_1$, $\Phi_2$) generated by the feeding of the first type winding (g) by way of its core (3) is separated into two substantially equal parts, one of which ($\Phi_2$) passes through the core (5) of the second type winding ($p_1$), eventually through the cores (4, 5) of each of the second type windings ($p_1$, $p_2$), thereby to subject the rotor to two magnetic fields which are substantially symmetric relative to two perpendicular axes (x, y).

2. Motor as set forth in claim 1, characterized by the fact that the magnetic circuit of the stator is arranged to support two second type windings ($p_1$, $p_2$) in a manner such that the resultant axis (17) of the magnetic field generated by the first type winding (g) and that (18) generated by said second type windings ($p_1$, $p_2$) energized in phase opposition are substantially perpendicular.

3. Motor as set forth in claim 1, characterized by the fact that the magnetic circuit of the stator is arranged to support two second type windings ($p_1$, $p_2$) in a manner such that the resultant axis of the magnetic field generated by the first type winding (g) and that generated by said second type windings energized in phase have the same sense and direction (19).

4. Motor as set forth in claim 1, characterized by the fact that the magnetic circuit of the stator is arranged to support one second type winding ($p_1$) in a manner such that the resultant axis of the magnetic field generated by the first type winding (g) and that generated by said second type winding ($p_1$) are substantially at an angle of 45°.

Fig. 1a

Fig. 3

2/4

Fig.5

Fig.6

Fig.7

Fig.1b

Fig.8

Fig. 2

Fig. 4a

Fig. 4b

Fig. 4c

Fig. 4d

Fig.9

$Cab(g)$

$Cab(p_1)$

$C$

$-Cab(p_1)$

$C_5$

$C_6$

$S_2'$   $I_1'$   $S_1$   $A_1$   $S_2$   $\alpha$

$Ca$

$U(g)$   $t$

$U_i(p_1)$   $t$

Fig.10a

$U(p_1)$   $t$

$U(g)$   $t$

Fig.10b

$t$

Fig.11

$t$